# EUROPÄISCHE PATENTANMELDUNG

(11) **EP 2 983 281 A1**
(43) Veröffentlichungstag der Anmeldung: **10.02.2016**
(21) Anmeldenummer: 15170209.9
(22) Anmeldetag: 02.06.2015
(51) Int. Cl.: H02M 1/42, H02M 7/23, H02M 1/00

(54) **EINSPEISUNG MIT EINZELN BETREIBBAREN PARALLELEN PFC GLEICHRICHTERN FÜR WÄRMEPUMPENUMRICHTER MIT TEILLASTANFORDERUNGEN**

(30) Priorität: 04.08.2014 DE 102014215312
(71) Anmelder: ROBERT BOSCH GMBH, 70442 Stuttgart (DE)
(72) Erfinder: Dombrowsky, Uwe, 31079 Sibbesse (DE)

(57) **Zusammenfassung**

Steuerungsvorrichtung (100) für eine Klimatisierungseinrichtung (200), aufweisend:
- wenigstens einen Eingangsanschluss (110), der an ein elektrisches Versorgungsnetz anschließbar ist;
- einen Ausgangsanschluss (120), an den die Klimatisierungseinrichtung (200) anschließbar ist;
- einen Frequenzumrichter (10); und
- eine mit dem Frequenzumrichter (10) verschaltete Entstörungseinrichtung (20) mit wenigstens zwei Leistungspfaden (40a...40n), wobei mittels der Entstörungseinrichtung (20) ein Oberwelleneintrag des Frequenzumrichters (10) in das elektrische Versorgungsnetz minimierbar ist.

## Beschreibung

Die Erfindung betrifft eine Steuerungsvorrichtung für eine Klimatisierungseinrichtung. Die Erfindung betrifft ferner ein Verfahren zum Betreiben einer Klimatisierungseinrichtung.

### Stand der Technik

Zum Ansteuern von Wärmepumpen werden oftmals Frequenzumrichter eingesetzt, um die Wärmepumpen mit verbessertem Wirkungsgrad zu betreiben. Mittels des Frequenzumrichters kann eine stufenlose Drehzahlverstellung des Kompressors und damit eine Leistungsregelung des Kältekreises durchgeführt werden. Auf diese Weise können häufige Abschaltpausen des Kompressors und damit des Kältekreises vermieden werden, was vorteilhaft ein wiederholtes Aufbauen des thermodynamischen Prozesses vermeidet, wodurch eine elektrische Energieaufnahme reduziert werden kann.

Zur Einhaltung von gesetzlichen Vorschriften bezüglich einer Einkopplung von Netzfrequenzharmonischen (Störfrequenzen) in das allgemeine Stromnetz ist es erforderlich, zwischen dem Netzanschluss der Wärmepumpe und dem Frequenzumrichter eine Leistungsfaktorregelung (engl. Power Factor Control, PFC) vorzusehen.

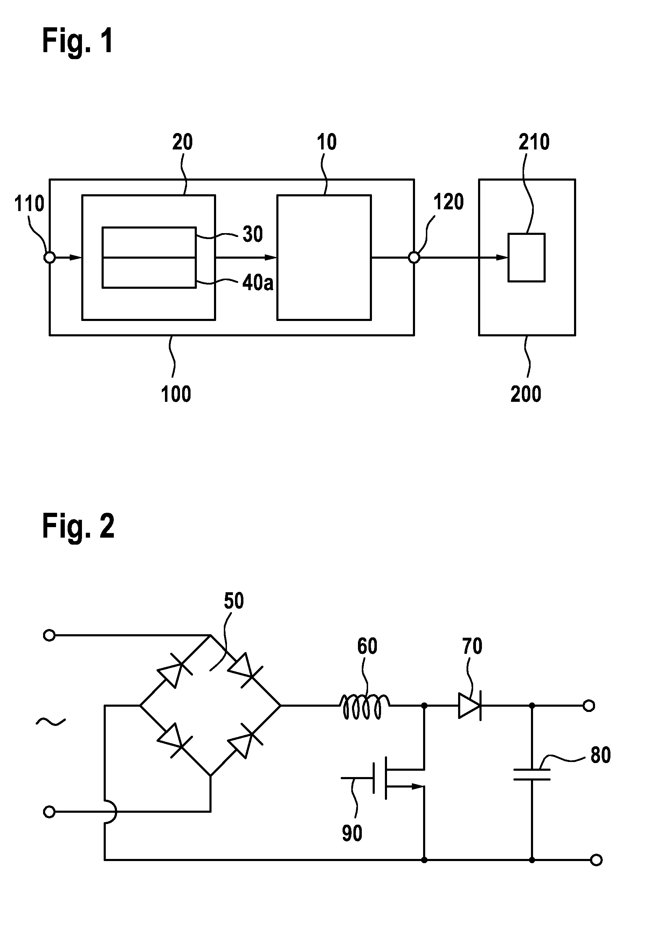

Fig. 1 zeigt ein Blockschaltbild einer derartigen bekannten Anordnung. Erkennbar ist eine Steuerungsvorrichtung 100 mit einem Frequenzumrichter 10 und einer mit dem Frequenzumrichter 10 funktional verbundenen Entstörungseinrichtung 20. Mittels des Frequenzumrichters 10 kann eine stufenlose Drehzahlverstellung eines Kompressors 210 der Klimatisierungseinrichtung bzw. des Klimageräts 200 durchgeführt werden und damit eine Leistungsregelung des gesamten Kältekreises. Die Klimatisierungseinrichtung 200 ist beispielhaft als eine Wärmepumpe ausgeführt, kann alternativ auch aber auch als ein anderes elektrisches Gerät für Kühl/Heizzwecke ausgebildet sein. Die Entstörungseinrichtung 20 ist als eine Power-Factor-Control ausgebildet, die eine Regelungseinrichtung 30 und einen Leistungspfad 40a aufweist.

Die Entstörungseinrichtung 20 und der Frequenzumrichter 10 werden für Wärmepumpen in der Regel in einer einzelnen Komponente in Form der Steuerungsvorrichtung 100 realisiert und speziell auf den Kompressor 210 bezüglich Arbeitsfrequenzen, elektrischer Ausgangsspannungen und elektrischer Ausgangsleistung optimiert. Die Steuerungsvorrichtung 100 wird üblicherweise als "Wärmepumpenfrequenzumrichter" (engl. Heat Pump Inverter) bezeichnet.

Der Leistungspfad 40a der Entstörungseinrichtung 20 ist in Fig. 2 für Wärmepumpen mit einphasigem Netzanschluss im Detail dargestellt. Erkennbar ist ein Gleichrichter 50 mit vier Dioden, an den eine Drossel 60, eine Diode 70 und ein Kondensator 80 in Serie verschaltet sind. Ein elektronisches Schaltelement 90, beispielsweise in Form eines MOS-FET-Transistors wird mit einer pulsweitenmodulierten elektrischen Spannung derart angesteuert, dass das Eingangssignal des Gleichrichters 50 und damit die Stromaufnahme aus dem elektrischen Versorgungsnetz im Wesentlichen sinusförmig ausgebildet ist. Auf diese Weise erfolgt möglichst wenig Einkopplung bzw. Eintrag von Oberwellenharmonischen in das allgemeine Stromversorgungsnetz. Mittels der Entstörungseinrichtung 20 ist es also möglich, harmonische Anteile an elektrischen Spannungen zu unterdrücken, die dadurch nicht in das elektrische Versorgungsnetz eingespeist werden.

### Offenbarung der Erfindung

Eine Aufgabe der vorliegenden Erfindung ist es, eine verbesserte Ansteuerung für eine Klimatisierungseinrichtung bereitzustellen.

Gemäß einem ersten Aspekt wird die Aufgabe gelöst mit einer Steuerungsvorrichtung für eine Klimatisierungseinrichtung, aufweisend:
- wenigstens einen Eingangsanschluss, der an ein elektrisches Versorgungsnetz anschließbar ist;
- einen Ausgangsanschluss, an den die Klimatisierungseinrichtung anschließbar ist;
- einen Frequenzumrichter; und
- eine mit dem Frequenzumrichter verschaltete Entstörungseinrichtung mit wenigstens zwei Leistungspfaden, wobei mittels der Entstörungseinrichtung ein Obenivelleneintrag des Frequenzumrichters in das elektrische Versorgungsnetz minimierbar ist.

Auf diese Weise ist ein effizienter und störungsarmer Betrieb der Klimatisierungseinrichtung unterstützt, der zudem kostengünstig ist, weil von Fall zu Fall viel elektrische Primärenergie eingespart werden kann.

Gemäß einem zweiten Aspekt wird die Aufgabe gelöst mit einem Verfahren zum Betreiben einer Klimatisierungseinrichtung, das folgende Schritte aufweist:
- Ansteuern der Klimatisierungseinrichtung mittels eines Ausgangssignals eines Frequenzumrichters einer Steuerungsvorrichtung; und
- Betreiben einer Entstörungseinrichtung für den Frequenzumrichter derart, dass ein Obenivelleneintrag des Frequenzumrichters in ein elektrisches Versorgungsnetz minimiert wird, wobei eine Anzahl von aktiven Leistungspfaden der Entstörungseinrichtung von einem Belastungsgrad der Klimatisierungseinrichtung abhängt.

Vorteilhafte Weiterbildungen der Steuerungsvorrichtung und des Verfahrens sind Gegenstand von Unteransprüchen.

Eine vorteilhafte Weiterbildung der Steuerungsvorrichtung zeichnet sich dadurch aus, dass die Entstörungseinrichtung eine Regelungseinrichtung aufweist, mittels der die Leistungspfade der Entstörungseinrichtung selektiv abschaltbar sind. Auf diese Weise ist ein Wirkungsgrad der Klimatisierungseinrichtung nochmals steigerbar. Aufgrund der Tatsache, dass die Klimatisierungseinrichtung zumeist nur im Teillastbetrieb genutzt wird, können einzelne Kanäle bzw. Leistungspfade der mehrkanaligen Entstörungseinrichtung ausgeschaltet bleiben und werden je nach Bedarf zugeschaltet bzw. aktiviert.

Eine vorteilhafte Weiterbildung der Steuerungsvorrichtung zeichnet sich dadurch aus, dass der Frequenzumrichter und die Entstörungseinrichtung in der Steuerungsvorrichtung zusammen oder voneinander getrennt angeordnet sind. Auf diese Weise ist eine Designfreiheit für die Klimatisierungseinrichtung vorteilhaft erhöht.

Eine vorteilhafte Weiterbildung der Steuerungsvorrichtung sieht vor, dass die Steuerungsvorrichtung drei Eingangsanschlüsse zum Anschließen der Steuerungsvorrichtung an ein elektrisches Dreiphasennetz aufweist. Auf diese Weise kann die Erfindung auch für leistungsstarke Klimatisierungseinrichtungen genutzt werden, so dass ein energieeffizienter Betrieb derartiger dreiphasiger Klimatisierungseinrichtungen möglich ist.

Weitere vorteilhafte Weiterbildungen der Steuerungsvorrichtung sehen vor, dass die Entstörungseinrichtung drei oder vier oder mehr Leistungspfade aufweist. Auf diese Weise ist die Anzahl der Leistungspfade flexibel konfigurierbar, so dass ein Anpassen an die jeweils verwendete Klimatisierungseinrichtung einfach möglich ist.

Eine weitere vorteilhafte Weiterbildung der Steuerungsvorrichtung sieht vor, dass die Leistungspfade phasenversetzt betreibbar sind. Auf diese Weise lassen sich vorteilhaft optimierte Schaltungsvarianten realisieren.

Eine vorteilhafte Weiterbildung der Steuerungsvorrichtung sieht vor, dass die Klimatisierungseinrichtung eine Wärmepumpe ist. Auf diese Weise ist die Erfindung nutzbringend für einen Typus von Elektrogerät anwendbar, der die meiste Zeit in einem Teillastbetrieb gefahren wird und mittels der Erfindung ein hohes Niveau an Energieeinsparung realisieren kann.

Die Erfindung wird im Folgenden mit weiteren Merkmalen und Vorteilen anhand von mehreren Figuren in Detail beschrieben. Gleiche bzw. funktionsgleiche Elemente sind darin mit gleichen Bezugszeichen versehen.

In den Figuren zeigt:
- Fig. 1: ein Blockschaltbild einer herkömmlichen Steuerungsvorrichtung für eine Klimatisierungseinrichtung;
- Fig. 2: ein detailliertes Schaltbild eines Leistungspfads der herkömmlichen Steuerungsvorrichtung;
- Fig. 3: ein detailliertes Schaltbild einer Variante eines Leistungspfades der herkömmlichen Steuerungsvorrichtung;
- Fig. 4: eine Ausführungsform einer erfindungsgemäßen Steuerungsvorrichtung; und
- Fig. 5: ein prinzipielles Ablaufdiagramm einer Ausführungsform des erfindungsgemäßen Verfahrens.

### Beschreibung von Ausführungsformen

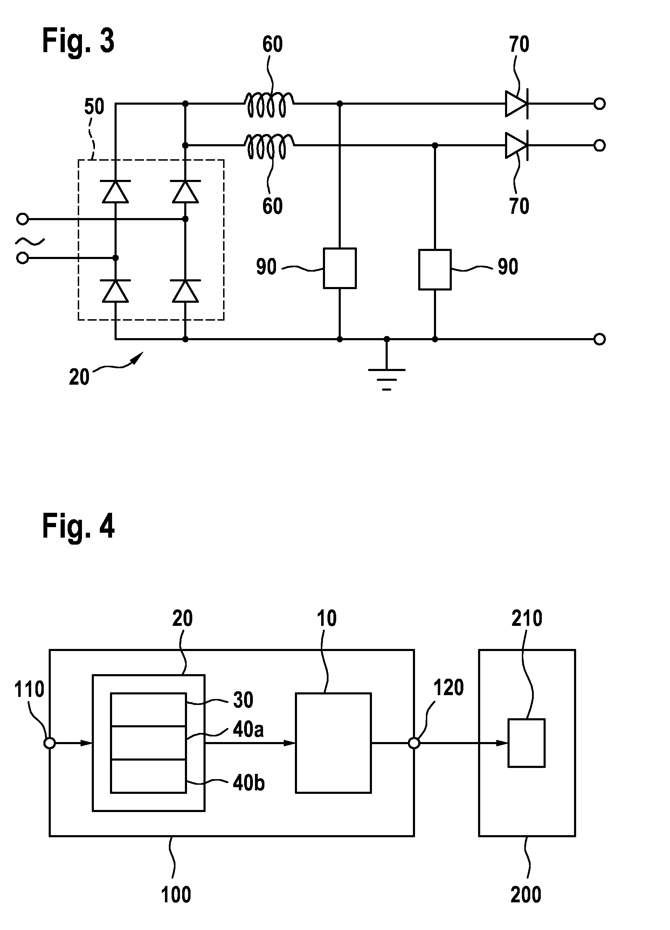

Fig. 3 zeigt ein detailliertes Schaltbild einer herkömmlichen mehrkanaligen Entstörungseinrichtung 20 mit zwei parallel geschalteten Leistungspfaden. Die beiden Leistungspfade umfassen jeweils eine Spule 60 eine Diode 70 und einen Halbleiterschalter 90, wodurch eine elektrische Gesamtleistung auf die einzelnen Leistungspfade verteilt werden kann. Dadurch ist es vorteilhaft möglich, kleinere und damit schnellere Halbleiterbauteile einzusetzen und eine Arbeitsfrequenz der Halbleiterbauteile zu erhöhen. Die Leistungspfade können optional phasenversetzt angesteuert werden, um ein generiertes elektromagnetisches Störpotential zu reduzieren.

Aus der Mehrkanaligkeit der Entstörungseinrichtung 20 ergeben sich zahlreiche Vorteile:
- Durch die höhere Arbeitsfrequenz sinkt die erforderliche Induktivität der Spulen 60
- Die kleinere Induktivität ermöglicht einen wirtschaftlichen Einsatz von verlustarmen Ferritkernen für die Spulen 60
- Der Wirkungsgrad der Entstörungseinrichtung 20 ist verbessert
- Der phasenversetzte Betrieb der Leistungspfade reduziert den Aufwand im Netzfilter bzw. in der Entstörungseinrichtung 20

Aufgrund der oben genannten Vorteile werden mehrkanalige Entstörungseinrichtungen 20 in vielerlei elektrischen Geräten, z.B. in Waschmaschinen verwendet.

Fig. 4 zeigt ein Blockschaltbild einer Ausführungsform einer Steuerungsvorrichtung 100 für eine Klimatisierungseinrichtung 200, insbesondere für eine Wärmepumpe. Die Steuerungsvorrichtung 100 umfasst einen Eingangsanschluss 110, mit dem die Steuerungsvorrichtung 100 an ein elektrisches Versorgungsnetz mit elektrischer Wechselspannung angeschlossen werden kann. Ferner umfasst die Steuerungseinrichtung 100 einen Ausgangsanschluss 120, an den die Klimatisierungseinrichtung 200 angeschlossen werden kann. Die Steuerungsvorrichtung 100 umfasst eine Entstörungseinrichtung 20, die mit dem Eingangsanschluss 110 verbunden ist und die an ihrem Ausgang mit einem Frequenzumrichter 10 verbunden ist. Ein pulsweitenmoduliertes Ausgangssignal des Frequenzumrichters 10 wird über den Ausgangsanschluss 21 einem Kompressor 210 der Klimatisierungseinrichtung 200 zugeführt und steuert damit den Kompressor 210 in seiner Drehzahl.

Die Entstörungseinrichtung 20 weist eine Regelungseinrichtung 30 und wenigstens zwei Leistungspfade 40a, 40b auf, die z.B. gemäß Fig. 3 ausgebildet sind. Im Ergebnis wird somit mit der Steuerungsvorrichtung 100 ein Wärmepumpenfrequenzumrichter realisiert. Der Einsatz der Entstörungseinrichtung 20 mit wenigstens zwei Leistungspfaden 40a, 40b in dem Wärmepumpenfrequenzumrichter bringt einen besonderen technischen Vorteil für das technische System der Wärmepumpe. Einzelne Leistungspfade 40a...40n der mehrkanaligen Entstörungseinrichtung 20 können nämlich im Teillastbereich abgeschaltet werden. Der genannte Teillastbereich ist jener, in dem die Wärmepumpe die meiste Zeit betrieben wird, wobei ein Volllastbetrieb nur bei extremer Kälte oder bei extremer Hitze oder bei der Aufbereitung von warmem Brauchwasser erforderlich ist. Auf diese Weise steigt vorteilhaft der Teillastwirkungsgrad des Wärmepumpenfrequenzumrichters und der Wärmepumpe. Es kann auf diese Weise ein elektrischer Primärenergiebedarf der Wärmepumpe vorteilhaft deutlich gesenkt werden, was sich vorteilhaft in reduzierten Stromkosten auswirkt.

Die Regelungseinrichtung 30 kann beispielsweise in Hard- oder Software, beispielsweise mittels eines digitalen Signalprozessors realisiert sein.

Vorteilhaft sind für die erfindungsgemäße Steuerungsvorrichtung 100 noch weitere Varianten möglich, die nicht in Figuren dargestellt sind. Beispielsweise ist es auch möglich, eine räumliche Trennung der Entstörungseinrichtung 20 und des Frequenzumrichters 10 vorzusehen (nicht dargestellt). Die beiden Baugruppen Entstörungseinrichtung 20 und Frequenzumrichter 10 ergeben auch bei dieser Variante die Funktionalität des Wärmepumpenfrequenzumrichters gemäß Fig. 4.

Eine Anzahl der Leistungspfade 40a...40n ist in der mehrkanaligen Entstörungseinrichtung 20 prinzipiell nicht begrenzt. Es sind Lösungen mit zwei, drei, vier oder mehr Leistungspfaden 40a...40n denkbar. Eine sinnvolle Anzahl der Leistungspfade steigt dabei mit der maximal möglichen Ausgangsleistung des Frequenzumrichters 10 bzw. mit der maximalen Heizleistung der Klimatisierungseinrichtung 200. Auf diese Weise ist es vorteilhaft möglich, kleinere und schnellere Bauteile einzusetzen, wobei die elektrische Leistung auf die einzelnen Leistungspfade aufgeteilt wird. Je größer die Anzahl der Leistungspfade ist, desto feinere Abstufungen können hinsichtlich der Abschaltung der einzelnen Leistungspfade erzielt werden. Auf diese Weise ist es vorteilhaft möglich, einen Wirkungsgrad der Klimatisierungseinrichtung 200 sehr effizient zu steuern. Beispielsweise ist es bei einer höheren Arbeitsfrequenz möglich, kleinere und kostengünstigere Bauelemente einzusetzen, mit denen eine höhere Taktfrequenz realisierbar ist.

Besonders vorteilhaft ist es auch möglich, eine entsprechende Lösung für Wärmepumpen mit einem Dreiphasennetzanschluss vorzusehen (nicht dargestellt). In diesem Fall sind pro elektrischer Phase mindestens zwei Leistungspfade erforderlich, wobei alle Leistungspfade zusammen von einer gemeinsamen Regelungseinrichtung 30 angesteuert werden. Auf diese Weise kann auch für besonders leistungsstarke Klimatisierungseinrichtungen eine energieeffiziente Energieversorgung bereitgestellt werden.

Vorteilhaft kann die erfindungsgemäße Energieversorgungsvorrichtung in allen Wärmepumpen mit Frequenzumrichter eingesetzt werden.

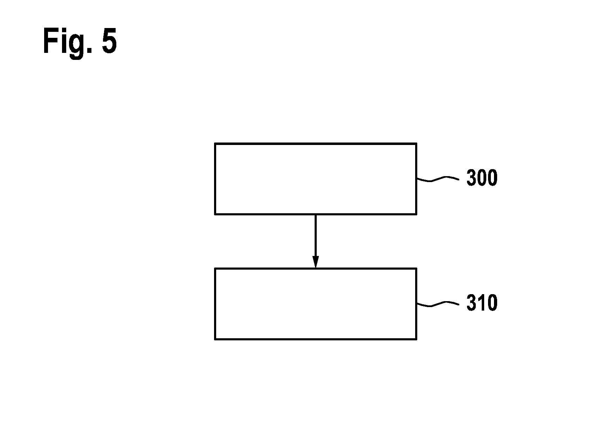

Fig. 5 zeigt ein prinzipielles Ablaufdiagramm einer Ausführungsform des erfindungsgemäßen Verfahrens.

In einem Schritt 300 erfolgt ein Ansteuern der Klimatisierungseinrichtung 200 mittels eines Ausgangssignals eines Frequenzumrichters 10 einer Steuerungseinrichtung 100.

In einem weiteren Schritt 310 wird eine Entstörungseinrichtung 20 für den Frequenzumrichter 10 derart betrieben, dass ein Oberwelleneintrag des Frequenzumrichters 10 in ein elektrisches Versorgungsnetz minimiert wird, wobei eine Anzahl von aktiven Leistungspfaden 40a...40n der Entstörungseinrichtung 20 von einem Belastungsgrad der Klimatisierungseinrichtung 200 abhängt.

Zusammenfassend wird mit der vorliegenden Erfindung eine verbesserte Steuerungsvorrichtung für eine Klimatisierungseinrichtung bereitgestellt, die sich dadurch auszeichnet, dass eine Mehrkanal-Entstörungseinrichtung vorgesehen ist. Durch die selektive Abschaltmöglichkeit der einzelnen Leistungspfade ist es möglich, den elektrischen Energiebedarf der Wärmepumpe entsprechend ihrem Betriebsmodus bereitzustellen. Aufgrund der Tatsache, dass die Wärmepumpe statistisch betrachtet in ca. 70 % Ihrer Betriebszeit unter 50 % ihrer Nennleistung betrieben wird, ein energieschonender Betrieb und damit eine Einsparung an Primärenergie realisiert werden.

Der Fachmann wird die beschriebenen Merkmale geeignet abändern oder miteinander kombinieren können, ohne vom Kern der Erfindung abzuweichen.

## Patentansprüche

1. Steuerungsvorrichtung (100) für eine Klimatisierungseinrichtung (200), aufweisend:
- wenigstens einen Eingangsanschluss (110), der an ein elektrisches Versorgungsnetz anschließbar ist;
- einen Ausgangsanschluss (120), an den die Klimatisierungseinrichtung (200) anschließbar ist;
- einen Frequenzumrichter (10); und
- eine mit dem Frequenzumrichter (10) verschaltete Entstörungseinrichtung (20) mit wenigstens zwei Leistungspfaden (40a...40n), wobei mittels der Entstörungseinrichtung (20) ein Oberwelleneintrag des Frequenzumrichters (10) in das elektrische Versorgungsnetz minimierbar ist.

2. Steuerungsvorrichtung nach Anspruch 1, **dadurch gekennzeichnet, dass** die Entstörungseinrichtung (20) eine Regelungseinrichtung (30) aufweist, mittels der die Leistungspfade (40a...40n) der Entstörungseinrichtung (20) selektiv abschaltbar sind.

3. Steuerungsvorrichtung (100) nach Anspruch 1 oder 2, **dadurch gekennzeichnet, dass** der Frequenzumrichter (10) und die Entstörungseinrichtung (20) in der Steuerungsvorrichtung (100) zusammen oder voneinander getrennt angeordnet sind.

4. Steuerungsvorrichtung (100) nach einem der vorhergehenden Ansprüche,
**dadurch gekennzeichnet, dass** die Steuerungsvorrichtung (100) drei Eingangsanschlüsse zum Anschließen der Steuerungsvorrichtung (100) an ein elektrisches Dreiphasennetz aufweist.

5. Steuerungsvorrichtung (100) nach einem der vorhergehenden Ansprüche,
**dadurch gekennzeichnet, dass** die Entstörungseinrichtung (20) drei oder vier oder mehr Leistungspfade (40a...40n) aufweist.

6. Steuerungsvorrichtung (100) einem der vorhergehenden Ansprüche, **dadurch gekennzeichnet, dass** die Leistungspfade (40a...40n) phasenversetzt betreibbar sind.

7. Steuerungsvorrichtung (100) nach einem der vorhergehenden Ansprüche,
**dadurch gekennzeichnet, dass** die Klimatisierungseinrichtung (200) eine Wärmepumpe ist.

8. Verfahren zum Betreiben einer Klimatisierungseinrichtung (200), aufweisend die Schritte:
- Ansteuern der Klimatisierungseinrichtung (200) mittels eines Ausgangssignals eines Frequenzumrichters (10) einer Steuerungsvorrichtung (100); und
- Betreiben einer Entstörungseinrichtung (20) für den Frequenzumrichter (10) derart, dass ein Oberwelleneintrag des Frequenzumrichters (10) in ein elektrisches Versorgungsnetz minimiert wird, wobei eine Anzahl von aktiven Leistungspfaden (40a...40n) der Entstörungseinrichtung (20) von einem Belastungsgrad der Klimatisierungseinrichtung (200) abhängt.

9. Verfahren nach Anspruch 8, wobei mittels einer Regelungseinrichtung (30) die Leistungspfade (40a...40n) selektiv abgeschaltet werden.

10. Computerprogrammprodukt mit Programmcodemitteln zum Ausführen des Verfahrens nach Anspruch 8, wenn es auf einem computerlesbaren Datenträger gespeichert ist oder auf einer elektronischen Regelungseinrichtung (30) abläuft.
